# EUROPEAN PATENT APPLICATION

(11) **EP 4 678 391 A2**
(43) Date of publication of application: **14.01.2026**
(21) Application number: 25219278.6
(22) Date of filing: 21.07.2023
(51) Int. Cl.: B32B 7/09

(54) **FIBER COMPOSITE MATERIAL, AND PREPARATION METHOD AND USE THEREOF**

(30) Priority: 03.08.2022 CN 202210927172
(62) Divisional of application: 23186897.7
(71) Applicant: Shenzhen Smoore Technology Limited, Shenzhen, Guangdong 518102 (CN)
(72) Inventor: LI, Xin, Shenzhen, Guangdong 518102 (CN); FENG, Dali, Shenzhen, Guangdong 518102 (CN); ZHOU, Yu, Shenzhen, Guangdong 518102 (CN); LI, Wei, Shenzhen, Guangdong 518102 (CN)
(74) Representative: Manitz Finsterwald Patent- und Rechtsanwaltspartnerschaft mbB

(57) **Abstract**

The present invention relates to the technical field of liquid-guiding materials of e-cigarettes, and specifically, to a fiber composite material, and a preparation method and use thereof. The fiber composite material provided in the present invention includes a heat resistant layer and a liquid guiding layer that are laminated. The material of the heat resistant layer includes a heat resistant fiber and a hydrophilic fiber, the material of the liquid guiding layer includes a hydrophilic fiber, the heat resistant fiber includes a polyimide fiber, and the hydrophilic fiber includes a Tencel fiber.

## Description

### TECHNICAL FIELD

The present invention relates to the technical field of liquid-guiding materials of electronic cigarettes, and specifically, to a fiber composite material, and a preparation method and use thereof.

### BACKGROUND

On the current market, an aerosol generation device of a vaporization core material used in a common electronic cigarette (i.e., e-cigarette) is mainly composed of a vaporization core and an e-liquid container. The vaporization core is a core part of the aerosol generation device. The vaporization core includes a porous material and a heating element. The porous material supplies an e-liquid to the heating element, which has an important impact on performances of the e-cigarette, such as an amount of smoke generated, a particle size of smoke particles, and a transmission efficiency of flavors and nicotine. At present, there are mainly two types of liquid-guiding materials used in a vaporization core. One is a cotton core including natural cotton and synthetic fibers, and the other is a porous liquid-guiding ceramic. The porous liquid-guiding ceramic has excellent heat resistance but has a limited liquid-guiding rate. Therefore, the cotton core is still the mainstream liquid-guiding material. In the related art, there is a composite material obtained from cotton fibers, flax fibers, non-woven fabrics, and the like by using a spunlacing process. Although the composite material in actual application can implement better liquid locking and liquid storage performances, actual requirements on liquid guiding performance still cannot be satisfied. Therefore, it is necessary to develop a fiber composite material with high liquid guiding performance.

### SUMMARY

An objective of the present invention is to overcome the defect that an existing fiber composite material has limited liquid guiding performance and cannot effectively satisfy actual requirements by providing a fiber composite material, and a preparation method and use thereof.

In order to realize the above objective, the present invention adopts the following technical solutions.

Provided is a fiber composite material. The fiber composite material includes a heat resistant layer and a liquid guiding layer that are laminated.

The heat resistant layer is made of a material including a heat resistant fiber and a hydrophilic fiber. The liquid guiding layer is made of a material including a hydrophilic fiber. The heat resistant fiber includes a polyimide fiber. The hydrophilic fiber includes a Tencel fiber. It may be understood that the heat resistant layer is made of a material including the polyimide fiber and the Tencel fiber, and the liquid guiding layer is made of a material including the Tencel fiber.

Preferably, based on the total weight of the material of the heat resistant layer, the weight proportion of the heat resistant fiber is 20% to 80%, and the weight proportion of the hydrophilic fiber is 20% to 80%.

Preferably, the heat resistant fiber further includes at least one of a polyphenylene sulfide fiber, an aramid fiber, a polytetrafluoroethylene fiber, a carbon fiber, a metal fiber, a poly(p-phenylene-2,6-benzobisoxazole) (PBO) fiber, and a poly[2,2'-(m-phenylene)-5,5'-bisbenzimidazole] (PBI) fiber.

The hydrophilic fiber further includes at least one of a cotton fiber, a flax fiber, a hemp fiber, a Modal fiber, a copper ammonia fiber, a bamboo fiber, a seaweed fiber, a chitosan fiber, and a carboxymethyl cellulose fiber. When the heat resistant fiber further includes at least one of a polyphenylene sulfide fiber, an aramid fiber, a polytetrafluoroethylene fiber, a carbon fiber, a metal fiber, a poly(p-phenylene-2,6-benzobisoxazole) (PBO) fiber, and a poly[2,2'-(m-phenylene)-5,5'-bisbenzimidazole] (PBI) fiber, the ratio of the polyimide fiber to the foregoing fiber is not specifically limited in the present invention. Optionally, the mass ratio of the polyimide fiber to the foregoing fiber may be (1-10):1. When the hydrophilic fiber further includes at least one of a cotton fiber, a flax fiber, a hemp fiber, a Modal fiber, a copper ammonia fiber, a bamboo fiber, a seaweed fiber, a chitosan fiber, and a carboxymethyl cellulose fiber, the ratio of the Tencel fiber to the foregoing fiber is not specifically limited in the present invention. Optionally, the mass ratio of the Tencel fiber to the foregoing fiber may be (1-10):1.

Preferably, the material of the heat resistant layer and/or the material of the liquid guiding layer further includes a high resilience fiber. Preferably, the high resilience fiber includes a hollow polyester fiber. Further preferably, the hollow polyester fiber is a three-dimensional crimped hollow polyester fiber.

The heat resistant fiber, the hydrophilic fiber, and the high resilience fiber described above in the present invention are all existing conventional fiber materials, which are commercially available. For example, the polyimide fiber is referred to as a PI fiber for short and is also referred to as an aramid fiber, which is a commercially available and common fiber material in the art.

Preferably, based on the total weight of the material of the heat resistant layer, the weight proportion of the heat resistant fiber is 19.9% to 80%, the weight proportion of the hydrophilic fiber is 19.9% to 80%, and the weight proportion of the high resilience fiber is 0.1% to 20%. Based on the total weight of the material of the liquid guiding layer, the weight proportion of the hydrophilic fiber is 50% to 99.9%, and the weight proportion of the high resilience fiber is 0.1% to 50%.

Preferably, based on the total weight of the material of the heat resistant layer, the weight proportion of the heat resistant fiber is 20% to 60%, the weight proportion of the hydrophilic fiber is 20% to 60%, and the weight proportion of the high resilience fiber is 10% to 20%; and based on the total weight of the material of the liquid guiding layer, the weight proportion of the hydrophilic fiber is 80% to 90%, and the weight proportion of the high resilience fiber is 10% to 20%. In the present invention, the control of the amount of the high resilience fiber, the amount of the heat resistant fiber and the amount of the hydrophilic fiber can improve not only liquid guiding performance of the composite material but also liquid storage and liquid locking performances of the composite material.

Preferably, the porosity of the heat resistant layer is 70% to 98%, and the porosity of the liquid guiding layer is 50% to 82%.

Preferably, the thickness of the heat resistant layer is 30% to 60% of the total thickness of the heat resistant layer and the liquid guiding layer; and the grammage of the heat resistant layer is 30% to 60% of the total grammage of the heat resistant layer and the liquid guiding layer.

Preferably, the total thickness of the heat resistant layer and the liquid guiding layer is 0.9 -1.8 mm, and the total grammage of the heat resistant layer and the liquid guiding layer is 180-300 g/m².

Preferably, the length of the heat resistant fiber is 38-60 mm, and the fineness of the heat resistant fiber is 0.8-7.0 D. The length of the hydrophilic fiber is 28-60 mm, and the fineness of the hydrophilic fiber is 0.9-2.5 D. The length of the high resilience fiber is 38-60 mm, and the fineness of the high resilience fiber is 3-10 D. It may be understood that the unit D of the fineness is denier. More preferably, the cross section of the heat resistant fiber or the hydrophilic fiber is selected to be a profiled cross section, such as a trilobal shape or a cross shape, so as to improve liquid guiding performance of the fiber. It may be understood that the unit of the fineness is denier, abbreviated D, which is a unit of measure for the thickness of fibers. A higher value in denier indicates a thicker fiber. Preferably, the length of the heat resistant fiber is 50-60 mm, and the fineness of the heat resistant fiber is 0.8-1 D. The length of the hydrophilic fiber is 50-60 mm, and the fineness of the hydrophilic fiber is 0.9-1.0 D. In the present invention, the control of the lengths and fineness of the heat resistant fiber and the hydrophilic fiber can improve not only liquid guiding performance of the composite material but also liquid storage and liquid locking performances of the composite material.

Optionally, the average pore size of the fiber composite material is 40-70 µm, and the porosity of the fiber composite material is 60% to 90%.

The present invention further provides a method for preparing the fiber composite material as described above, including using a needling process to prepare the fiber composite material.

Preferably, the method includes the following steps:
(1) opening, mixing, and carding the material of the heat resistant layer to obtain a mono-layer net-like thin fiber material, laying a plurality of the mono-layer net-like thin fiber materials together to form a fiber web material, and performing needling on the fiber web material to entangle fibers for shaping, to obtain a semi-fabricated fiber web for the heat resistant layer;
(2) opening, mixing, and carding the material of the liquid guiding layer to obtain a mono-layer net-like thin fiber material, laying a plurality of the mono-layer net-like thin fiber materials together to form a fiber web material, and performing needling on the fiber web material to entangle fibers for shaping, to obtain a semi-fabricated fiber web for the liquid guiding layer; and
(3) bonding the semi-fabricated fiber web for the heat resistant layer and the semi-fabricated fiber web for the liquid guiding layer together by needling, and carrying out hot rolling, to obtain the fiber composite material.

Preferably, in step (1), the grammage of the mono-layer net-like thin fiber material is 5-20 g/m², and the thickness of the fiber web material is 4-15 cm. The step of performing needling on the fiber web material to entangle fibers for shaping includes sequentially carrying out a pre-needling process and a backward needling process on the fiber web material. Preferably, in the pre-needling process, the density of needles arranged on a needle plate is 2000-4000 needles/meter, the needling frequency is 350-450 times/min, and the needling depth is 1.5-2.0 mm; and in the backward needling process, the density of needles arranged on a needle plate is 3000-5000 needles/meter, the needling frequency is 390-500 times/min, and the needling depth is 1.9-2.5 mm. Further preferably, in the pre-needling process, the density of needles arranged on a needle plate is 3500 needles/meter, the needling frequency is 400 times/min, and the needling depth is 1.5-2.0 mm; and in the backward needling process, the density of needles arranged on a needle plate is 4000 needles/meter, the needling frequency is 440 times/min, and the needling depth is 1.9-2.5 mm.

In step (2), the grammage of the mono-layer net-like thin fiber material is 10-30 g/m², and the thickness of the fiber web material is 11-16 cm. The step of performing needling on the fiber web material to entangle fibers for shaping includes sequentially carrying out a pre-needling process and a backward needling process on the fiber web material. Preferably, in the pre-needling process, the density of needles arranged on a needle plate is 2000-4000 needles/meter, the needling frequency is 400-500 times/min, and the needling depth is 2.0-2.5 mm; and in the backward needling process, the density of needles arranged on a needle plate is 3000-5000 needles/meter, the needling frequency is 450-550 times/min, and the needling depth is 2.5-3.0 mm. Further preferably, in the pre-needling process, the density of needles arranged on a needle plate is 3500 needles/meter, the needling frequency is 450 times/min, and the needling depth is 2.0-2.5 mm; and in the backward needling process, the density of needles arranged on a needle plate is 4000 needles/meter, the needling frequency is 500 times/min, and the needling depth is 2.5-3.0 mm.

In step (3), the step of needling includes a step of forward needling and a step of backward needling. Preferably, in the step of forward needling, the density of needles arranged on a needle plate is 10000-15000 needles/meter, the needling frequency is 1000-1400 times/min, and the needling depth is 1.0-2.0 mm; in the step of backward needling, the density of needles arranged on a needle plate is 12000-16000 needles/meter, the needling frequency is 1000-1400 times/min, and the needling depth is 0.9-2.5 mm. Further preferably, in the step of forward needling, the density of needles arranged on a needle plate is 12000 needles/meter, the needling frequency is 1200 times/min, and the needling depth is 1.0-1.5 mm; and in the step of backward needling, the density of needles arranged on a needle plate is 14000 needles/meter, the needling frequency is 1300 times/min, and the needling depth is 0.9-1.6 mm. Optionally, the heat resistant layer material is arranged on the side where the needles first come into contact.

The hot rolling is carried out by using a three-roller calender with a speed controlled to 20-50 meters/min, a distance between rollers controlled to 0.9-1.8 mm, and a hot rolling temperature controlled to 160°C to 180°C.

After the hot rolling, the method further includes a step of winding the fiber composite material to form a coil.

The present invention further provides a liquid guiding element. The material of the liquid guiding element is the fiber composite material above or the fiber composite material prepared by the method above.

The present invention further provides a heating assembly, including the fiber composite material above and a heating body which is in contact with the heat resistant layer.

The present invention further provides a vaporizer, including the heating assembly above.

The present invention further provides an electronic vaporization device, including the vaporizer above.

The present invention has the following beneficial effects.
(1) The fiber composite material provided in the present invention includes a heat resistant layer and a liquid guiding layer that are laminated. The material of the heat resistant layer includes a polyimide fiber and a Tencel fiber. The polyimide fiber has low thermal conduction performance, which contributes to heat dispersion of heating wires during vaporization. As the viscosity of an e-liquid decreases at high temperatures, fluidity of the e-liquid absorbed by the Tencel fiber is improved, so that the e-liquid is more uniformly distributed in the composite material. In addition, the material of the liquid guiding layer includes the Tencel fiber, so that the e-liquid can be fully supplied on a surface of the polyimide fiber, which is conducive to improving liquid storage and liquid locking performances of the entire composite material. In the present invention, by providing the specific polyimide fiber and Tencel fiber in the heat resistant layer and cooperating with the Tencel fiber in the liquid guiding layer, the liquid guiding performance of the composite material can be greatly improved; and moreover, the obtained composite material also has similar or even higher liquid storage and liquid locking performances than those of an existing liquid guiding material.
   In addition, the polyimide fiber has very excellent heat resistance and does not change its physical properties during long-term use at high temperatures. As a skeleton material of the heat resistant layer, the polyimide fiber can better maintain dimensional stability of the material. The Tencel fiber has better liquid absorbing and liquid locking performances than a cotton fiber, which ensures that the heat resistant layer has sufficient liquid storage capacity and prevents from dry burning (at 800°C to 1000°C) or even being burnt due to insufficient liquid supply. The specific materials of the heat resistant layer and the liquid guiding layer can ensure that there is sufficient supply of the e-liquid even in continuous use, so that the performances of liquid guiding, liquid storage, and liquid locking do not decrease much, and taste consistency can be maintained for a longer period of time. Moreover, the obtained composite material has excellent heat resistance and service life, as well as better resistance to e-liquid erosion. Long-term use of the composite material rarely causes degradation and deterioration to form harmful oligomers, reducing miscellaneous odors.
(2) The material of the heat resistant layer and/or the liquid guiding layer in the present invention further includes a high resilience fiber. The high resilience fiber has very significant elastic recovery. Even if the fiber is soaked in a high-viscosity e-liquid, a high-porosity structure of non-woven fabric obtained through needling can be ensured, so that the performances of liquid guiding, liquid storage, and liquid locking of the composite material in use do not decrease, but in turn increase.
(3) In the present invention, the heat resistant fiber further includes at least one of a polyphenylene sulfide fiber, an aramid fiber, a polytetrafluoroethylene fiber, a carbon fiber, a metal fiber, a poly(p-phenylene-2,6-benzobisoxazole) fiber, and a poly[2,2'-(m-phenylene)-5,5'-bisbenzimidazole] fiber; and the hydrophilic fiber further includes at least one of a cotton fiber, a flax fiber, a hemp fiber, a Modal fiber, a copper ammonia fiber, a bamboo fiber, a seaweed fiber, a chitosan fiber, and a carboxymethyl cellulose fiber. In the present invention, the selection of the foregoing materials is conducive to improving the liquid guiding performance of the composite material, can ensure that the composite material has similar or even higher liquid storage and liquid locking performances than the existing liquid guiding material, and can satisfy different performance requirements of products. For example, the introduction of the metal fiber or carbon fiber is conducive to improving vaporization efficiency of the entire e-liquid and can obtain the liquid storage, liquid locking, and liquid guiding performances required by common cotton materials. The introduction of the seaweed fiber, chitosan fiber, and carboxymethyl cellulose fiber is conducive to reducing liquid leakage of products.

### BRIEF DESCRIPTION OF THE DRAWINGS

To describe the technical solutions in the specific implementations of the present invention or in the related art more clearly, the following briefly describes the accompanying drawings required for describing the specific implementations or the related art. Apparently, the accompanying drawings in the following description show some implementations of the present invention, and a person of ordinary skill in the art may still derive other drawings from these accompanying drawings without creative efforts.
FIG. 1 is a scanning electron micrograph of an overall cross section of a fiber composite material prepared in Example 1.
FIG. 2 shows a test result of heat resistance of a polyimide fiber used in Example 1 of the present invention.
FIG. 3 shows a test result of heat resistance of a commercially available cotton fiber.
FIG. 4 shows a test result of liquid guiding performance of a fiber composite material prepared in Example 1.
FIG. 5 is a photograph showing appearance of a fiber composite material prepared in Example 1.

### DETAILED DESCRIPTION

The following examples are provided to further understand the present invention, are not limited to the optimal implementation, and do not limit the content and protection scope of the present invention. Any product identical or similar to the present invention obtained by anyone under the inspiration of the present invention or by combining the present invention with features of other existing technologies falls within the protection scope of the present invention.

The examples in which specific experimental steps or conditions are not indicated shall be carried out in accordance with operations or conditions of common experimental steps described in the literature in the art. The reagents or instruments used without indicating the manufacturer are all common reagent products and are commercially available from the market.

It needs to be noted that the fineness and length of a fiber involved in the following examples or comparative examples of the present invention are indicated in the form of brackets. For example, in Example 1, polyimide fiber (2.0 D × 51 mm) indicates that the fineness of the polyimide fiber is 2.0 D and the length of the polyimide fiber is 51 mm.

The thickness and grammage of a fiber composite material involved in the following examples are measured by using the following methods.

The thickness of a fiber composite material is measured using a micrometer thickness gauge (BK-3281, measurement diameter: 10 mm). The measurement area is 3 m × 0.5 m. The thickness is measured at 20 points in a width direction of the fiber composite material and then averaged.

Measurement of grammage: 10 pieces are randomly sampled from a fiber composite material with an area of 3 m × 0.5 m and respectively cut into circles each with a size of 100 cm², then weighing and averaging.

### Example 1

This example provides a fiber composite material, and a method for preparing the same includes the following steps.
(1) 400 kg of polyimide fibers (2.0 D × 51 mm) and 600 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 12 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 1.7 mm. In the backward needling process, the density of needles arranged on a needle plate is 4000 needles/meter, the needling frequency is 440 times/min, and the needling depth is 2.1 mm. After that, a semi-fabricated fiber web for a heat resistant layer was obtained.
(2) 1000 kg of Tencel fibers (1.5 D × 38 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.2 mm. In the backward needling process, the density of needles arranged on a needle plate is 4000 needles/meter, the needling frequency is 500 times/min, and the needling depth is 2.7 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.3 mm. In the step of backward needling, the density of needles arranged on a needle plate is 14000 needles/meter, the needling frequency is 1300 times/min, and the needling depth is 1.3 mm. Hot rolling was carried out by using a three-roller calender with a speed controlled to 20 meters/min, a distance between rollers controlled to 1.3 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber and the Tencel fiber. The material of the liquid guiding layer is the Tencel fiber. Based on the total weight of the material of the heat resistant layer, the weight proportion of the polyimide fiber is 40%, and the weight proportion of the Tencel fiber is 60%. The porosity of the heat resistant layer is 78%. The porosity of the liquid guiding layer is 60%. The thickness of the heat resistant layer is 45% of the total thickness of the heat resistant layer and the liquid guiding layer. The grammage of the heat resistant layer is 45% of the total grammage of the heat resistant layer and the liquid guiding layer. The total thickness of the heat resistant layer and the liquid guiding layer is 1.5 mm. The total grammage of the heat resistant layer and the liquid guiding layer is 250 g/m².

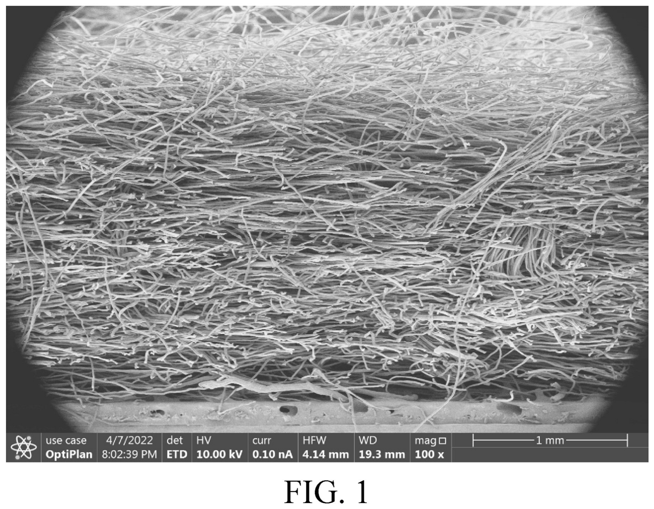

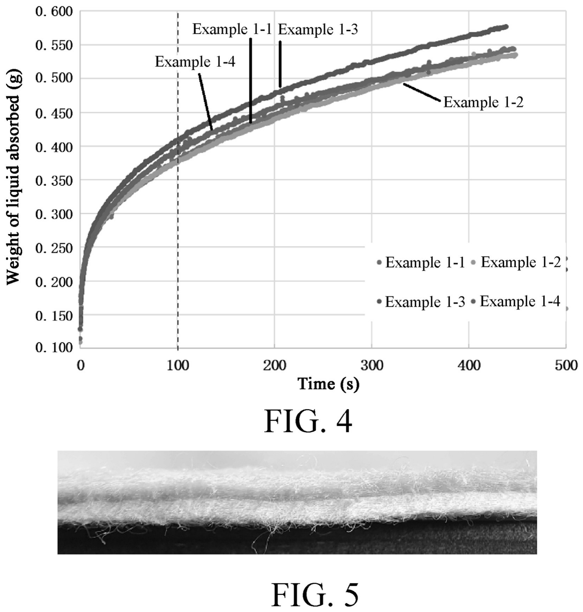

FIG. 1 is a scanning electron micrograph of an overall cross section of the fiber composite material prepared in Example 1. It can be seen from FIG. 1 that the upper layer is a loose and porous heat resistant layer, and the lower layer is a relative tight liquid guiding layer. FIG. 5 is a photograph showing the appearance of the fiber composite material prepared above. Its structure can be divided into two layers, the upper layer is the heat resistant layer made of the mixture of the polyimide fiber and the Tencel fiber, and the lower layer is the liquid guiding layer made of the Tencel fiber.

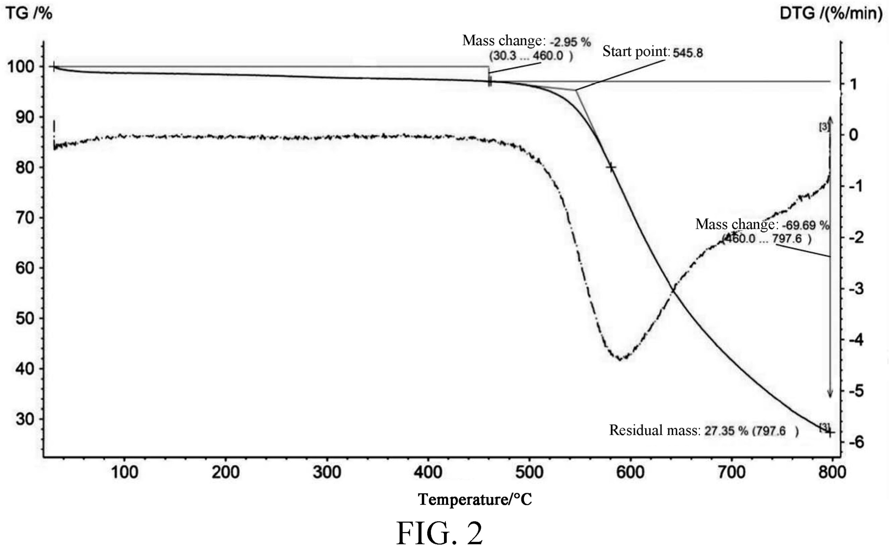

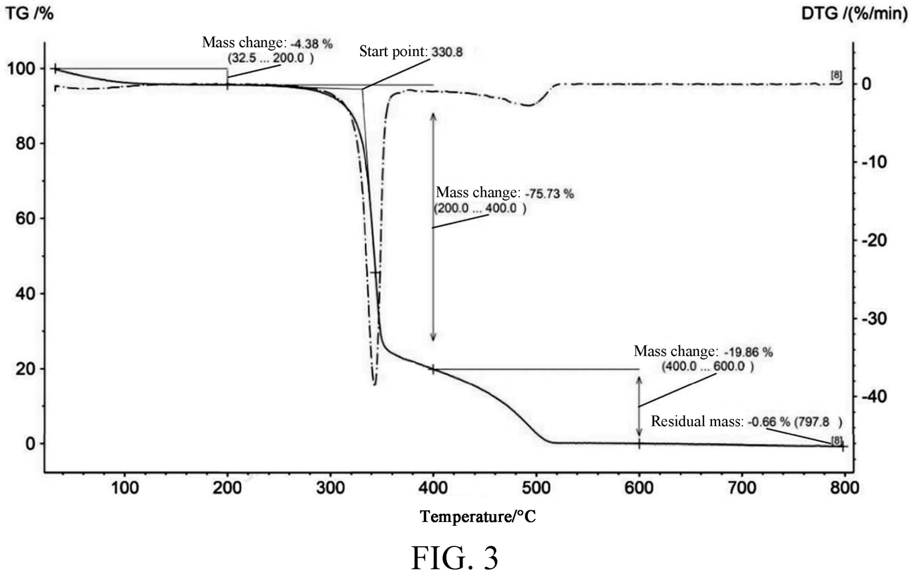

FIG. 2 shows a test result of heat resistance of the polyimide fiber used above as a raw material. FIG. 3 shows a test result of heat resistance of a commercially available cotton fiber. It can be seen from FIG. 2 and FIG. 3 that the polyimide fiber has better heat resistance than the cotton fiber. The use of the polyimide fiber in the heat resistant layer of the present invention is more conducive to improving heat resistance of the composite material.

FIG. 4 shows a test result of liquid guiding performance of the fiber composite material prepared in this example. The test was carried out with four samples in parallel, namely, Example 1-1, Example 1-2, Example 1-3, and Example 1-4. The test result is shown in FIG. 4.

### Example 2

This example provides a fiber composite material, and a method for preparing the same includes the following steps.
(1) 800 kg of polyimide fibers (2.0 D × 51 mm) and 200 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 5 g/m² mono-layer net-like thin fiber material. Multiple mono-layer net-like thin fiber materials were laid together to form a fiber web material (with the thickness of 4.5 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 350 times/min, and the needling depth is 1.5 mm. In the backward needling process, the density of needles arranged on a needle plate is 4000 needles/meter, the needling frequency is 390 times/min, and the needling depth is 1.9 mm. After that, a semi-fabricated fiber web for a heat resistant layer was obtained.
(2) 1000 kg of Tencel fibers (1.5 D × 38 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 11 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 2.0 mm. In the backward needling process, the density of needles arranged on a needle plate is 4000 needles/meter, the needling frequency is 450 times/min, and the needling depth is 2.5 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.5 mm. In the step of backward needling, the density of needles arranged on a needle plate is 14000 needles/meter, the needling frequency is 1300 times/min, and the needling depth is 1.6 mm. Hot rolling was carried out by using a three-roller calender with a speed controlled to 20 meters/min, a distance between rollers controlled to 0.9 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber and the Tencel fiber. The material of the liquid guiding layer is the Tencel fiber. Based on the total weight of the material of the heat resistant layer, the weight proportion of the polyimide fiber is 80%, and the weight proportion of the Tencel fiber is 20%. The porosity of the heat resistant layer is 71%. The porosity of the liquid guiding layer is 50%. The thickness of the heat resistant layer is 30% of the total thickness of the heat resistant layer and the liquid guiding layer. The grammage of the heat resistant layer is 30% of the total grammage of the heat resistant layer and the liquid guiding layer. The total thickness of the heat resistant layer and the liquid guiding layer is 0.9 mm. The total grammage of the heat resistant layer and the liquid guiding layer is 180 g/m².

### Example 3

This example provides a fiber composite material, and a method for preparing the same includes the following steps.
(1) 200 kg of polyimide fibers (2.0 D × 51 mm) and 800 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.0 mm. In the backward needling process, the density of needles arranged on a needle plate is 4000 needles/meter, the needling frequency is 490 times/min, and the needling depth is 2.4 mm. After that, a semi-fabricated fiber web for a heat resistant layer was obtained.
(2) 1000 kg of Tencel fibers (1.5 D × 38 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 30 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 500 times/min, and the needling depth is 2.5 mm. In the backward needling process, the density of needles arranged on a needle plate is 4000 needles/meter, the needling frequency is 450 times/min, and the needling depth is 3.0 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 2.0 mm. In the step of backward needling, the density of needles arranged on a needle plate is 14000 needles/meter, the needling frequency is 1300 times/min, and the needling depth is 2.5 mm. Hot rolling was carried out by using a three-roller calender with a speed controlled to 20 meters/min, a distance between rollers controlled to 1.8 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber and the Tencel fiber. The material of the liquid guiding layer is the Tencel fiber. Based on the total weight of the material of the heat resistant layer, the weight proportion of the polyimide fiber is 20%, and the weight proportion of the Tencel fiber is 80%. The porosity of the heat resistant layer is 78%. The porosity of the liquid guiding layer is 61%. The thickness of the heat resistant layer is 50% of the total thickness of the heat resistant layer and the liquid guiding layer. The grammage of the heat resistant layer is 50% of the total grammage of the heat resistant layer and the liquid guiding layer. The total thickness of the heat resistant layer and the liquid guiding layer is 1.8 mm. The total grammage of the heat resistant layer and the liquid guiding layer is 300 g/m².

### Example 4

This example provides a fiber composite material, and a method for preparing the same includes the following steps.
(1) 300 kg of polyimide fibers (2.0 D × 51 mm), 100 kg of three-dimensional crimped hollow polyester fibers (5 D × 60 mm), and 600 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 10 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 2.0 mm. In the backward needling process, the density of needles arranged on a needle plate is 4000 needles/meter, the needling frequency is 440 times/min, and the needling depth is 2.4 mm. After that, a semi-fabricated fiber web for a heat resistant layer was obtained.
(2) 900 kg of Tencel fibers (1.5 D × 38 mm) and 100 kg of three-dimensional crimped hollow polyester fibers (5 D × 60 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.5 mm. In the backward needling process, the density of needles arranged on a needle plate is 4000 needles/meter, the needling frequency is 500 times/min, and the needling depth is 3.0 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.3 mm. In the step of backward needling, the density of needles arranged on a needle plate is 14000 needles/meter, the needling frequency is 1300 times/min, and the needling depth is 1.3 mm. Hot rolling was carried out by using a three-roller calender with a speed controlled to 20 meters/min, a distance between rollers controlled to 1.3 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber, the Tencel fiber, and the three-dimensional crimped hollow polyester fiber. The material of the liquid guiding layer is the Tencel fiber and the three-dimensional crimped hollow polyester fiber. Based on the total weight of the material of the heat resistant layer, the weight proportion of the polyimide fiber is 30%, the weight proportion of the Tencel fiber is 60%, and the weight proportion of the three-dimensional crimped hollow polyester fiber is 10%. Based on the total weight of the material of the liquid guiding layer, the weight proportion of the Tencel fiber is 90%, and the weight proportion of the three-dimensional crimped hollow polyester fiber is 10%. The porosity of the heat resistant layer is 85%. The porosity of the liquid guiding layer is 65%. The thickness of the heat resistant layer is 45% of the total thickness of the heat resistant layer and the liquid guiding layer. The grammage of the heat resistant layer is 45% of the total grammage of the heat resistant layer and the liquid guiding layer. The total thickness of the heat resistant layer and the liquid guiding layer is 1.5 mm. The total grammage of the heat resistant layer and the liquid guiding layer is 250 g/m².

### Example 5

This example provides a fiber composite material, and a method for preparing the same includes the following steps.
(1) 300 kg of polyimide fibers (2.0 D × 51 mm), 100 kg of three-dimensional crimped hollow polyester fibers (5 D × 60 mm), and 600 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 12 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 1.7 mm. In the backward needling process, the density of needles arranged on a needle plate is 4000 needles/meter, the needling frequency is 440 times/min, and the needling depth is 2.1 mm. After that, a semi-fabricated fiber web for a heat resistant layer was obtained.
(2) 900 kg of Tencel fibers (1.5 D × 38 mm) and 100 kg of three-dimensional crimped hollow polyester fibers (5 D × 60 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.2 mm. In the backward needling process, the density of needles arranged on a needle plate is 4000 needles/meter, the needling frequency is 500 times/min, and the needling depth is 2.7 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.3 mm. In the step of backward needling, the density of needles arranged on a needle plate is 14000 needles/meter, the needling frequency is 1300 times/min, and the needling depth is 1.3 mm. Hot rolling was carried out by using a three-roller calender with a speed controlled to 20 meters/min, a distance between rollers controlled to 1.3 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber, the Tencel fiber, and the three-dimensional crimped hollow polyester fiber. The material of the liquid guiding layer is the Tencel fiber and the three-dimensional crimped hollow polyester fiber. Based on the total weight of the material of the heat resistant layer, the weight proportion of the polyimide fiber is 30%, the weight proportion of the Tencel fiber is 60%, and the weight proportion of the three-dimensional crimped hollow polyester fiber is 10%. Based on the total weight of the material of the liquid guiding layer, the weight proportion of the Tencel fiber is 90%, and the weight proportion of the three-dimensional crimped hollow polyester fiber is 10%. The porosity of the heat resistant layer is 82%. The porosity of the liquid guiding layer is 77%. The thickness of the heat resistant layer is 40% of the total thickness of the heat resistant layer and the liquid guiding layer. The grammage of the heat resistant layer is 40% of the total grammage of the heat resistant layer and the liquid guiding layer. The total thickness of the heat resistant layer and the liquid guiding layer is 1.62 mm. The total grammage of the heat resistant layer and the liquid guiding layer is 250 g/m².

### Example 6

This example provides a fiber composite material, and a method for preparing the same includes the following steps.
(1) 200 kg of polyimide fibers (2.0 D × 51 mm), 200 kg of three-dimensional crimped hollow polyester fibers (5 D × 60 mm), and 600 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 14 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.0 mm. In the backward needling process, the density of needles arranged on a needle plate is 4000 needles/meter, the needling frequency is 490 times/min, and the needling depth is 2.4 mm. After that, a semi-fabricated fiber web for a heat resistant layer was obtained.
(2) 800 kg of Tencel fibers (1.5 D × 38 mm) and 200 kg of three-dimensional crimped hollow polyester fibers (5 D × 60 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 30 g/m² mono-layer net-like thin fiber material. Multiple mono-layer net-like thin fiber materials were laid together to form a fiber web material (with the thickness of 16 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 500 times/min, and the needling depth is 2.5 mm. In the backward needling process, the density of needles arranged on a needle plate is 4000 needles/meter, the needling frequency is 550 times/min, and the needling depth is 3.0 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 2.0 mm. In the step of backward needling, the density of needles arranged on a needle plate is 14000 needles/meter, the needling frequency is 1300 times/min, and the needling depth is 2.5 mm. Hot rolling was carried out by using a three-roller calender with a speed controlled to 20 meters/min, a distance between rollers controlled to 1.8 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber, the Tencel fiber, and the three-dimensional crimped hollow polyester fiber. The material of the liquid guiding layer is the Tencel fiber and the three-dimensional crimped hollow polyester fiber. Based on the total weight of the material of the heat resistant layer, the weight proportion of the polyimide fiber is 20%, the weight proportion of the Tencel fiber is 60%, and the weight proportion of the three-dimensional crimped hollow polyester fiber is 20%. Based on the total weight of the material of the liquid guiding layer, the weight proportion of the Tencel fiber is 80%, and the weight proportion of the three-dimensional crimped hollow polyester fiber is 20%. The porosity of the heat resistant layer is 98%. The porosity of the liquid guiding layer is 80%. The thickness of the heat resistant layer is 50% of the total thickness of the heat resistant layer and the liquid guiding layer. The grammage of the heat resistant layer is 50% of the total grammage of the heat resistant layer and the liquid guiding layer. The total thickness of the heat resistant layer and the liquid guiding layer is 1.8 mm. The total grammage of the heat resistant layer and the liquid guiding layer is 300 g/m².

### Example 7

This example provides a fiber composite material, and a method for preparing the same includes the following steps.
(1) 200 kg of polyimide fibers (2.0 D × 51 mm), 200 kg of three-dimensional crimped hollow polyester fibers (5 D × 60 mm), and 600 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 12 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 1.7 mm. In the backward needling process, the density of needles arranged on a needle plate is 4000 needles/meter, the needling frequency is 440 times/min, and the needling depth is 2.1 mm. After that, a semi-fabricated fiber web for a heat resistant layer was obtained.
(2) 800 kg of Tencel fibers (1.5 D × 38 mm) and 200 kg of three-dimensional crimped hollow polyester fibers (5 D × 60 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.2 mm. In the backward needling process, the density of needles arranged on a needle plate is 4000 needles/meter, the needling frequency is 500 times/min, and the needling depth is 2.7 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.3 mm. In the step of backward needling, the density of needles arranged on a needle plate is 14000 needles/meter, the needling frequency is 1300 times/min, and the needling depth is 1.3 mm. Hot rolling was carried out by using a three-roller calender with a speed controlled to 20 meters/min, a distance between rollers controlled to 1.3 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber, the Tencel fiber, and the three-dimensional crimped hollow polyester fiber. The material of the liquid guiding layer is the Tencel fiber and the three-dimensional crimped hollow polyester fiber. Based on the total weight of the material of the heat resistant layer, the weight proportion of the polyimide fiber is 20%, the weight proportion of the Tencel fiber is 60%, and the weight proportion of the three-dimensional crimped hollow polyester fiber is 20%. Based on the total weight of the material of the liquid guiding layer, the weight proportion of the Tencel fiber is 80%, and the weight proportion of the three-dimensional crimped hollow polyester fiber is 20%. The porosity of the heat resistant layer is 81%. The porosity of the liquid guiding layer is 81%. The thickness of the heat resistant layer is 45% of the total thickness of the heat resistant layer and the liquid guiding layer. The grammage of the heat resistant layer is 45% of the total grammage of the heat resistant layer and the liquid guiding layer. The total thickness of the heat resistant layer and the liquid guiding layer is 1.65 mm. The total grammage of the heat resistant layer and the liquid guiding layer is 250 g/m².

### Example 8

This example provides a fiber composite material, and a method for preparing the same includes the following steps.
(1) 750 kg of polyimide fibers (2.0 D × 51 mm), 50 kg of three-dimensional crimped hollow polyester fibers (5 D × 60 mm), and 200 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 5 g/m² mono-layer net-like thin fiber material. Multiple mono-layer net-like thin fiber materials were laid together to form a fiber web material (with the thickness of 6 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 350 times/min, and the needling depth is 1.5 mm. In the backward needling process, the density of needles arranged on a needle plate is 4000 needles/meter, the needling frequency is 390 times/min, and the needling depth is 1.9 mm. After that, a semi-fabricated fiber web for a heat resistant layer was obtained.
(2) 950 kg of Tencel fibers (1.5 D × 38 mm) and 50 kg of three-dimensional crimped hollow polyester fibers (5 D × 60 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 13 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 2.0 mm. In the backward needling process, the density of needles arranged on a needle plate is 4000 needles/meter, the needling frequency is 450 times/min, and the needling depth is 2.5 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.5 mm. In the step of backward needling, the density of needles arranged on a needle plate is 14000 needles/meter, the needling frequency is 1300 times/min, and the needling depth is 1.6 mm. Hot rolling was carried out by using a three-roller calender with a speed controlled to 20 meters/min, a distance between rollers controlled to 0.9 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber, the Tencel fiber, and the three-dimensional crimped hollow polyester fiber. The material of the liquid guiding layer is the Tencel fiber and the three-dimensional crimped hollow polyester fiber. Based on the total weight of the material of the heat resistant layer, the weight proportion of the polyimide fiber is 75%, the weight proportion of the Tencel fiber is 20%, and the weight proportion of the three-dimensional crimped hollow polyester fiber is 5%. Based on the total weight of the material of the liquid guiding layer, the weight proportion of the Tencel fiber is 95%, and the weight proportion of the three-dimensional crimped hollow polyester fiber is 5%. The porosity of the heat resistant layer is 82%. The porosity of the liquid guiding layer is 63%. The thickness of the heat resistant layer is 30% of the total thickness of the heat resistant layer and the liquid guiding layer. The grammage of the heat resistant layer is 50% of the total grammage of the heat resistant layer and the liquid guiding layer. The total thickness of the heat resistant layer and the liquid guiding layer is 0.9 mm. The total grammage of the heat resistant layer and the liquid guiding layer is 180 g/m².

### Example 9

This example provides a fiber composite material. Compared with Example 1, the difference lies in that 400 kg of polyimide fibers were replaced with 300 kg of polyimide fibers and 100 kg of polyphenylene sulfide fibers.

### Example 10

This example provides a fiber composite material. Compared with Example 1, the difference lies in that 400 kg of polyimide fibers were replaced with 300 kg of polyimide fibers and 100 kg of poly(p-phenylene-2,6-benzobisoxazole) (PBO) fibers.

### Example 11

This example provides a fiber composite material. Compared with Example 1, the difference lies in that in step (2), 1000 kg of Tencel fibers were replaced with 800 kg of Tencel fibers and 200 kg of cotton fibers.

### Example 12

This example provides a fiber composite material. Compared with Example 1, the difference lies in that in step (2), 1000 kg of Tencel fibers were replaced with 900 kg of Tencel fibers and 100 kg of flax fibers.

### Example 13

This example provides a fiber composite material, and a method for preparing the same includes the following steps.
(1) 400 kg of polyimide fibers (0.89 D × 60 mm) and 600 kg of Tencel fibers (0.9 D × 60 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 12 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 2.0 mm. In the backward needling process, the density of needles arranged on a needle plate is 4000 needles/meter, the needling frequency is 440 times/min, and the needling depth is 2.4 mm. After that, a semi-fabricated fiber web for a heat resistant layer was obtained.
(2) 1000 kg of Tencel fibers (0.9 D × 60 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.5 mm. In the backward needling process, the density of needles arranged on a needle plate is 4000 needles/meter, the needling frequency is 500 times/min, and the needling depth is 3.0 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.3 mm. In the step of backward needling, the density of needles arranged on a needle plate is 14000 needles/meter, the needling frequency is 1300 times/min, and the needling depth is 1.3 mm. Hot rolling was carried out by using a three-roller calender with a speed controlled to 20 meters/min, a distance between rollers controlled to 1.3 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber and the Tencel fiber. The material of the liquid guiding layer is the Tencel fiber. Based on the total weight of the material of the heat resistant layer, the weight proportion of the polyimide fiber is 40%, and the weight proportion of the Tencel fiber is 60%. Based on the total weight of the material of the liquid guiding layer, the weight proportion of the Tencel fiber is 100%. The porosity of the heat resistant layer is 83%. The porosity of the liquid guiding layer is 73%. The thickness of the heat resistant layer is 45% of the total thickness of the heat resistant layer and the liquid guiding layer. The grammage of the heat resistant layer is 45% of the total grammage of the heat resistant layer and the liquid guiding layer. The total thickness of the heat resistant layer and the liquid guiding layer is 1.5 mm. The total grammage of the heat resistant layer and the liquid guiding layer is 250 g/m².

### Example 14

This example provides a fiber composite material, and a method for preparing the same includes the following steps.
(1) 400 kg of polyimide fibers (0.89 D × 60 mm) and 600 kg of Tencel fibers (0.9 D × 60 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 12 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 1.7 mm. In the backward needling process, the density of needles arranged on a needle plate is 4000 needles/meter, the needling frequency is 440 times/min, and the needling depth is 2.1 mm. After that, a semi-fabricated fiber web for a heat resistant layer was obtained.
(2) 1000 kg of Tencel fibers (0.9 D × 60 mm) were fed into a coarse opener at a rotational speed of 1540 r/min, to preliminarily opening the lumpy crimped and compacted fibers. The opened fibers were fed into a cotton mixing container for mixing and then carded by cotton feeding rollers of a carding machine into a 20 g/m² mono-layer net-like thin fiber material. Multiple mono-layer net-like thin fiber materials were laid together to form a fiber web material (with the thickness of 15 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 450 times/min, and the needling depth is 2.2 mm. In the backward needling process, the density of needles arranged on a needle plate is 4000 needles/meter, the needling frequency is 500 times/min, and the needling depth is 2.7 mm. After that, a semi-fabricated fiber web for a liquid guiding layer was obtained.
(3) The semi-fabricated fiber web for the heat resistant layer and the semi-fabricated fiber web for the liquid guiding layer were fed through double channels into a forward needling machine for repeated needling, and then fed into a backward needling machine for needling, so that the semi-fabricated fiber web for the heat resistant layer and the semi-fabricated fiber web for the liquid guiding layer were fixed together by cross-entanglement of fibers. In the step of forward needling, the density of needles arranged on a needle plate is 12000 needles/meter, the needling frequency is 1200 times/min, and the needling depth is 1.3 mm. In the step of backward needling, the density of needles arranged on a needle plate is 14000 needles/meter, the needling frequency is 1300 times/min, and the needling depth is 1.3 mm. Hot rolling was carried out by using a three-roller calender with a speed controlled to 20 meters/min, a distance between rollers controlled to 1.3 mm, and a hot rolling temperature controlled to 180°C. After the hot rolling, the hot-rolled material was wound to form a coil to obtain the fiber composite material.

The fiber composite material prepared above includes a heat resistant layer and a liquid guiding layer that are laminated. The material of the heat resistant layer is the polyimide fiber and the Tencel fiber. The material of the liquid guiding layer is the Tencel fiber. Based on the total weight of the material of the heat resistant layer, the weight proportion of the polyimide fiber is 40%, and the weight proportion of the Tencel fiber is 60%. Based on the total weight of the material of the liquid guiding layer, the weight proportion of the Tencel fiber is 100%. The porosity of the heat resistant layer is 76%. The porosity of the liquid guiding layer is 82%. The thickness of the heat resistant layer is 40% of the total thickness of the heat resistant layer and the liquid guiding layer. The grammage of the heat resistant layer is 40% of the total grammage of the heat resistant layer and the liquid guiding layer. The total thickness of the heat resistant layer and the liquid guiding layer is 1.55 mm. The total grammage of the heat resistant layer and the liquid guiding layer is 250 g/m².

### Comparative Example 1

This comparative example provides a fiber composite material. Compared with Example 1, the difference in the preparation method lies in that in step (1), no polyimide fibers were added, and 1000 kg of Tencel fibers were added.

### Comparative Example 2

This comparative example provides a fiber composite material. Compared with Example 1, the difference in the preparation method lies in that in step (1), no Tencel fibers were added, and 1000 kg of polyimide fibers were added.

### Comparative Example 3

This comparative example provides a fiber composite material. Compared with Example 1, the difference in the preparation method lies in that no liquid guiding layer was provided. The preparation method includes the following steps.
(1) 400 kg of polyimide fibers (2.0 D × 51 mm) and 600 kg of Tencel fibers (1.5 D × 38 mm) were fed into a coarse opener at a rotational speed of 1250 r/min, to preliminarily opening the lumpy crimped and compacted fibers. The opened fibers were fed into a cotton mixing container for mixing and then carded by cotton feeding rollers of a carding machine into a 10 g/m² mono-layer net-like thin fiber material. Multiple mono-layer net-like thin fiber materials were laid together to form a fiber web material (with the thickness of 12 cm). The fiber web material was sequentially fed into a pre-needling machine and a backward needling machine to carry out pre-needling and backward needling to entangle the fiber web material for shaping. In the pre-needling process, the density of needles arranged on a needle plate is 3500 needles/meter, the needling frequency is 400 times/min, and the needling depth is 1.7 mm. In the backward needling process, the density of needles arranged on a needle plate is 4000 needles/meter, the needling frequency is 440 times/min, and the needling depth is 2.1 mm. After that, a semi-fabricated fiber web for a heat resistant layer was obtained.
(2) The semi-fabricated fiber web for the heat resistant layer was fed into a forward needling machine for repeated needling, and then fed into a backward needling machine for needling. In the step of forward needling, the density of needles arranged on a needle plate is 12000 needles/meter, the needling frequency is 1200 times/min, and the needling depth is 1.3 mm. In the step of backward needling, the density of needles arranged on a needle plate is 14000 needles/meter, the needling frequency is 1300 times/min, and the needling depth is 1.3 mm. Hot rolling was carried out by using a three-roller calender with a speed controlled to 20 meters/min, a distance between rollers controlled to 1.3 mm, and a hot rolling temperature controlled to 180°C. After the hot rolling, the hot-rolled material was wound to form a coil to obtain the fiber composite material.

### Test Example 1

The fiber composite materials obtained in the foregoing examples were respectively tested for the average pore size and the porosity.

Test for average pore size. The fiber composite material was cut into five circular samples with a 1.5 cm diameter. After fully soaked in a surfactant GQ16 (from Nanjing Gaoqian Functional Materials Technology Co., Ltd., surface tension: 16×10⁻³ N/m) for 30 mins, the circular samples were placed face-up into a test chamber of a capillary flow porometer, then capping on tight. Then, the test was carried out (with one sample each time) for an average pore size of each sample. Test results of the five samples were averaged.

Test for porosity. By using a n-butanol impregnation method, the fiber composite material dried to a constant weight was weighed m0, then immersed in n-butanol (analytical reagent) for 12 h, and then taken out. The fiber composite material was wiped with a filter paper to absorb the liquid on its front and back surfaces, and then weighed m1. The porosity of the fiber composite material was calculated. δ = (m1 - m0)/ρV × 100%. δ represents the porosity, ρ represents the density of n-butanol, and V represents the apparent volume of the fiber composite material.

The test result is shown in Table 1.

**Table 1**

| | **Average pore size (µm)** | **Porosity (%)** |
|---|---|---|
| Example 1 | 54 | 68 |
| Example 2 | 48 | 62 |
| Example 3 | 55 | 71 |
| Example 4 | 59 | 74 |
| Example 5 | 63 | 79 |
| Example 6 | 70 | 90 |
| Example 7 | 65 | 81 |
| Example 8 | 57 | 73 |
| Example 9 | 54 | 70 |
| Example 10 | 54 | 69 |
| Example 11 | 56 | 72 |
| Example 12 | 57 | 74 |
| Example 13 | 42 | 78 |
| Example 14 | 54 | 80 |

### Test Example 2

The fiber composite materials obtained in the foregoing examples and comparative examples were respectively tested for the liquid storage performance, the liquid locking performance, and the liquid guiding performance.

### Test for liquid storage performance

The fiber composite material was cut into four pieces each with a size of 7 mm × 60 mm, and then placed in a standard environment (temperature of 20°C, relative humidity of 65%) to balance for 24 h. Each of the four pieces was weighed, compressed by using a jig to a specific thickness of 1.1 mm, soaked in an e-liquid (apple e-liquid including 0 mg of nicotine and a solvent of propylene glycol and glycerol in a volume ratio of 50/50) for 50 mins, and then taken out and hung up to drain the e-liquid for 10 mins. The fiber composite material was slowly taken out of the jig and weighed. The liquid storage performance per unit mass of the fiber composite material was calculated based on a mass difference and then averaged, expressed in a unit of g/g, which indicates the mass of e-liquid stored in the fiber composite material per gram.

### Test for liquid locking performance

The fiber composite material was cut into four pieces each with a size of 7 mm × 60 mm, and then placed in a standard environment (temperature of 20°C, relative humidity of 65%) to balance for 24 h. Each of the four pieces was weighed, compressed by using a jig to a specific thickness of 1.1 mm, soaked in an e-liquid (apple e-liquid including 0 mg of nicotine and a solvent of propylene glycol and glycerol in a volume ratio of 50/50) for 50 mins, and then taken out and hung up to drain the e-liquid for 10 mins. The jig was centrifuged in a freeze-drying centrifuge at 20°C and 500 r/min for 15 mins, and then taken out. The fiber composite material was slowly taken out of the jig and weighed. The liquid locking performance per unit mass of the fiber composite material was calculated based on a mass difference and then averaged, expressed in a unit of g/g, which indicates the mass of e-liquid locked in the fiber composite material per gram.

### Test for liquid guiding performance

The fiber composite material was cut into four pieces each with a size of 7 mm × 60 mm, and then placed in a standard environment (temperature of 20°C, relative humidity of 65%) to balance for 24 h. Each of the four pieces was compressed by using a jig to a specific thickness of 1.1 mm, and the jig was vertically hung in a liquid-guiding tester. 10 ml of e-liquid (apple e-liquid including 0 mg of nicotine and a solvent of propylene glycol and glycerol in a volume ratio of 50/50) was placed on a platform of the liquid-guiding tester. The platform was slowly raised until a lower end of the jig touched the e-liquid. As soon as the platform stopped rising, time counting was started. The fiber composite material actively absorbs the e-liquid through a capillary effect and e-liquid affinity, resulting in continuous increase in the weight over time. The change of weight of the fiber composite material at 100s was recorded and averaged to obtain the liquid guiding performance of the fiber composite material, expressed in a unit of g/100s, which indicates the mass of e-liquid guided by the fiber composite material at 100s.

The test result is shown in Table 2.

**Table 2**

| | **Liquid storage performance (g/g)** | **Liquid locking performance (g/g)** | **Liquid guiding performance (g/100s)** |
|---|---|---|---|
| Example 1 | 4.90 | 2.98 | 0.3796 |
| Example 2 | 4.29 | 2.57 | 0.3104 |
| Example 3 | 5.06 | 3.15 | 0.3824 |
| Example 4 | 5.57 | 3.41 | 0.4237 |
| Example 5 | 5.90 | 3.64 | 0.4461 |
| Example 6 | 6.13 | 3.77 | 0.4996 |
| Example 7 | 5.49 | 3.38 | 0.4452 |
| Example 8 | 5.04 | 3.03 | 0.3974 |
| Example 9 | 4.86 | 2.95 | 0.3601 |
| Example 10 | 4.81 | 2.84 | 0.3603 |
| Example 11 | 5.14 | 3.07 | 0.3954 |
| Example 12 | 5.27 | 3.25 | 0.4101 |
| Example 13 | 5.32 | 3.58 | 0.4226 |
| Example 14 | 5.30 | 3.69 | 0.4426 |
| Comparative Example 1 | 5.24 | 3.35 | 0.2904 |
| Comparative Example 2 | 2.26 | 1.31 | 0.1325 |
| Comparative Example 3 | 3.07 | 2.05 | 0.2174 |

Apparently, the foregoing examples are only examples for clear description, rather than limitation to implementations.

## Claims

1. A heating assembly, comprising a fiber composite material and a heating body, **characterized in that**:
the fiber composite material comprising a heat resistant layer and a liquid guiding layer that are laminated, the heating body is in contact with the heat resistant layer,
wherein the heat resistant layer is made of a material comprising a heat resistant fiber and a hydrophilic fiber, the liquid guiding layer is made of a material comprising a hydrophilic fiber, and the heat resistant fiber comprises a polyimide fiber.

2. The heating assembly of claim 1, wherein the hydrophilic fiber comprises a Tencel fiber.

3. The heating assembly of claim 1 or 2, wherein the hydrophilic fiber comprises at least one of a cotton fiber, a flax fiber, a hemp fiber, a Modal fiber, a copper ammonia fiber, a bamboo fiber, a seaweed fiber, a chitosan fiber, and a carboxymethyl cellulose fiber.

4. The heating assembly of any one of claims 1 to 3, wherein the heat resistant fiber further comprises at least one of a polyphenylene sulfide fiber, an aramid fiber, a polytetrafluoroethylene fiber, a carbon fiber, a metal fiber, a poly(p-phenylene-2,6-benzobisoxazole) fiber, and a poly[2,2'-(m-phenylene)-5,5'-bisbenzimidazole] fiber.

5. The heating assembly of any one of claims 1 to 4, wherein based on a total weight of the material of the heat resistant layer, a weight proportion of the heat resistant fiber is 20% to 80%, and a weight proportion of the hydrophilic fiber is 20% to 80%.

6. The heating assembly of any one of claims 1 to 5, wherein the liquid guiding layer consists of the hydrophilic fiber.

7. The heating assembly of any one of claims 1 to 6, wherein a length of the heat resistant fiber is in a range from 38 mm to 60 mm, and a fineness of the heat resistant fiber is in a range from 0.8 D to 7.0 D.

8. The heating assembly of any one of claims 1 to 7, wherein a length of the hydrophilic fiber is in a range from 28 mm to 60 mm, and a fineness of the hydrophilic fiber is in a range from 0.9 D to 2.5 D.

9. The heating assembly of any one of claims 1 to 8, wherein a total thickness of the heat resistant layer and the liquid guiding layer is in a range from 0.9 mm to1.8 mm, and optionally a total grammage of the heat resistant layer and the liquid guiding layer is in a range from 180 g/m² to 300 g/m².

10. The heating assembly of any one of claims 1 to 9, wherein a cross section of the heat resistant fiber or a cross section of the hydrophilic fiber is selected to be a profiled cross section.

11. The heating assembly of any one of claims 1 to 10, wherein a porosity of the heat resistant layer is in a range from 70% to 98%.

12. The heating assembly of any one of claims 1 to 11, wherein a porosity of the liquid guiding layer is in a range from 50% to 82%.

13. The heating assembly of any one of claims 1 to 12, wherein a porosity of the fiber composite material is in a range from 60% to 90%, and optionally an average pore size of the fiber composite material is in a range from 40 µm to 70 µm.

14. A vaporizer, comprising the heating assembly of any one of claims 1 to 13.

15. An electronic vaporization device, comprising the heating assembly of any one of claims 1 to 13.
